# EUROPÄISCHE PATENTSCHRIFT

(11) **EP 0 679 833 B1**
(45) Veröffentlichungstag und Bekanntmachung des Hinweises auf die Patenterteilung: **20.01.1999**
(21) Anmeldenummer: 95101767.2
(22) Anmeldetag: 10.02.1995
(51) Int. Cl.: F16N 11/10, H01M 8/06

(54) **Schmierstoffspender mit elektrochemischem Antrieb**
Lubricant dispenser with an electrochemical actuator
Distribution à graisse avec un actionneur électrochimique

(30) Priorität: 27.04.1994 DE 4414672
(43) Veröffentlichungstag der Anmeldung: 02.11.1995
(73) Patentinhaber: Satzinger GmbH & Co., 97717 Euerdorf (DE)
(72) Erfinder: Graf, Walter Dipl. Ing., D-97717 Euerdorf (DE); Immisch, Ulrich Dipl. Chem., D-97768 Bad Kissingen (DE)
(74) Vertreter: Masch, Karl Gerhard, Dr.

(56) Entgegenhaltungen:
- WO-A-88/09767
- DE-B- 2 431 552
- US-A- 3 993 577
- US-A- 4 264 362

## Beschreibung

Die Erfindung betrifft einen Schmierstoff spender mit einem zylindrischen Schmierstoffspendergehäuse mit Spenderöffnung für den Schmierstoff, im Schmierstoffspendergehäuse geführtem Kolben und einem elektrochemischen Antrieb für den Kolben mit einem Elektrolyten und einem in dem Elektrolyten eintauchenden Treibgasbildungsbauteil, wobei das Treibgasbildungsbauteil zumindest ein in der Spannungsreihe der Elemente edleres Metall und zumindest ein in der Spannungsreihe der Elemente unedleres Metall aufweist, die sich leitend berühren und innerhalb des Treibgasbildungsbauteils mikroskopische Lokalelemente für eine elektrochemische Gaserzeugung bilden. - Das Schmierstoffspendergehäuse ist im allgemeinen aus mehreren Bauteilen zusammengesetzt und so gestaltet, daß der elektrochemische Antrieb zu einem gegebenen Zeitpunkt durch bedienungstechnische Maßnahmen in Gang gesetzt werden kann.

Bei dem bekannten Schmierstoffspender der eingangs genannten Art, von dem die Erfindung ausgeht (DE-B 24 31 552), besteht das Treibgasbildungsbauteil aus einer Legierung. Dieses Treibgasbildungsbauteil ist stabförmig ausgebildet und weist an seiner Mantelaußenseite eine Beschichtung auf. Dabei sind lediglich die Stirnflächen frei und dem Elektrolyten ausgesetzt. Bei diesem bekannten Schmierstoffspender ist die Gaserzeugung abhängig von der Legierungszusammensetzung sowie dem Gefüge der Legierung. Der Einfluß der Legierungszusammensetzung beziehungsweise des Gefüges auf die Gaserzeugungsrate ist komplex und eine definierte Änderung der elektrochemischen Gaserzeugung durch Beeinflussung der Legierungszusammensetzung bzw. des Gefüges ist nicht oder nur unzulänglich möglich. Auch die Auswahl der Metalle, die zu einer geeigneten Legierung verarbeitet werden können, ist begrenzt.

Fernerhin sind Schmierstoffspender bekannt (DE-B 12 56 001, DE 38 11 469 C2), bei denen die elektrochemisch wesentlichen Elemente, nämlich das edlere Metall und das unedlere Metall, ein zweiteiliges Aggregat aus mehreren makroskopischen Bauteilen bilden, die vereinigt sind. Die elektrochemisch wesentlichen Elemente bestehen z. B. aus einem Zinkplättchen und einem in eine Bohrung des Zinkplättchens eingelöteten, vernickelten Molybdänstab. Der Elektrolyt ist z. B. Zitronensäure. Die bekannten Maßnahmen haben sich bewährt, jedoch ist die Herstellung der bekannten Aggregate aufwendig.

Der Erfindung liegt das technische Problem zugrunde, einen Schmierstoffspender des beschriebenen Aufbaus und der beschriebenen Funktion zu schaffen, bei dem das Treibgasbildungsbauteil sehr einfach gefertigt werden kann und eine definierte elektrochemische Gaserzeugung gewährleistet.

Zur Lösung dieses technischen Problems lehrt die Erfindung einen Schmierstoffspender der eingangs beschriebenen Art, welcher dadurch gekennzeichnet ist, daß das Treibgasbildungsbauteil aus einer zu einer Tablette oder einer Kugel geformten feinteiligen Mischung aus einem pulverförmigen edleren Metall und einem pulverförmigen unedleren Metall besteht. - Es versteht sich, daß das Treibgasbildungselement auf eine bekannte Art und Weise zum Eintauchen in den Elektrolyten gebracht wird, um den elektrochemischen Antrieb einzuschalten. Nach bevorzugter Ausführungsform ist das Treibgasbildungsbauteil in dem Elektrolyten von dem Elektrolyten umgeben, es liegt gleichsam untergetaucht in dem Elektrolyten. Eine besondere Montage des Treibgasbildungsbauteils in dem Elektrolyten ist insofern nicht erforderlich, um einen erfindungsgemäßen Schmierstoffspender in Funktion zu setzen, ist es lediglich erforderlich, das Treibgasbildungsbauteil in den Elektrolyten einzutauchen oder einfallen zu lassen. Das Treibgasbildungsbauteil kann als Tablette, d. h. als eine mehr oder weniger zylindrische Scheibe, oder auch als Kugel ausgeführt sein.

Die Erfindung geht von der Erkenntnis aus, daß es nicht erforderlich ist, aus dem edleren Element einerseits, dem unedleren Element andererseits makroskopische Bauteile zu fertigen und diese miteinander zu vereinigen. Die elektrochemischen Vorgänge laufen überraschenderweise auch dann definiert ab, wenn das edlere Metall und das unedlere Metall nur gleichsam mikroskopische Lokalelemente bilden und erfindungsgemäß eine feinteilige Mischung aus einem pulverförmigen edleren Metall und einem pulverförmigen unedleren Metall vorgesehen ist.

Im einzelnen bestehen im Rahmen der Erfindung mehrere Möglichkeiten der weiteren Ausbildung und Gestaltung. Vorzugsweise sind die pulverförmigen Metalle sintermetallurgisch verbunden. Ein anderer Vorschlag besteht darin, das Treibgasbildungsbauteil aus leitfähigem Kunststoff und den darin eingebetteten feinteiligen edleren und unedleren Metallen aufzubauen. Hier dient der Kunststoff einerseits zur elektrischen Verbindung der beiden Metalle und andererseits als Matrix zur Haltung der Metalle in dem Treibgasbildungsbauteil. Ein weiterer Vorschlag der Erfindung ist dadurch gekennzeichnet, daß das Treibgasbildungsbauteil eine Mehrzahl von Bauteilelementen aus sintermetallurgisch verbundenen edleren und unedleren Metallen aufweist, die in eine Matrix aus in dem Elektrolyten lösbaren Kunststoff eingebettet sind. Es liegt im Rahmen der Erfindung, die Treibgasbildungsbauteile vor dem Einsatz optimierenden Behandlungen auszusetzen, beispielsweise die Oberfläche aufzurauhen oder aber die Treibgasbildungsbauteile vor dem Einsatz einer Wärmebehandlung zu unterwerfen.

Nach der Erfindung kann mit den verschiedensten edleren und unedleren Metallen aus der Spannungsreihe der Elemente gearbeitet werden. Der Masseanteil des edleren Metalls an der Gesamtmasse kann dabei stets zur Steuerung der Auf lösungsgeschwindigkeit des unedleren Metalls und damit zur Steuerung der Treibgasentwicklung eingesetzt werden. Bewährt haben sich Spannungsreihen aus Zink/Kupfer, aus Aluminium/Kupfer, Aluminium/Zink und dergleichen. Die unedleren Metalle bilden in dem elektrochemischen Antrieb die Anode, die edleren die Kathode. Im einfachsten Falle werden die Auswahl der Metalle und der Elektrolyt so gewählt, daß Wasserstoff entwickelt wird. In der Ausführungsform, bei der das Treibgasbildungsbauteil eine Mehrzahl von Bauteilelementen aus sintermetallurgisch verbundenen edleren und unedleren Metallen aufweist, dient die Kunststoffmatrix dazu, diese Bauteilelemente aufzunehmen und nach Maßgabe der Zersetzungsrate des Kunststoffes immer wieder neue Bauteilelemente für den elektrochemischen Prozeß freizugeben.

Im folgenden wird die Erfindung anhand einer lediglich ein Ausführungsbeispiel darstellenden Zeichnung ausführlicher erläutert. Es zeigen
- Fig. 1: eine Draufsicht auf ein erfindungsgemäßes Treibgasbildungsbauteil,
- Fig. 2: einen Schnitt in Richtung A-A durch den Gegenstand nach Fig. 1 und
- Fig. 3: in Gegenüber den Figuren 1 und 2 wesentlich vergrößertem Maßstab einen Ausschnitt B aus dem Gegenstand der Fig. 2.

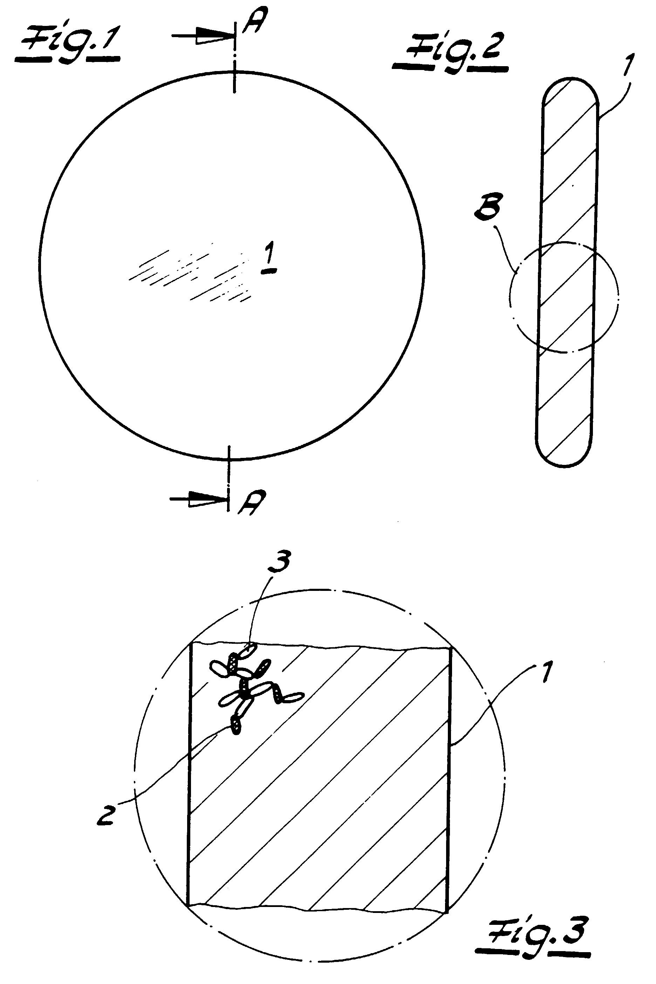

Das in den Figuren dargestellte Treibgasbildungsbauteil 1 ist für einen Schmierstoffspender bestimmt, wie er in der Einleitung dieses Patents beschrieben ist. Aus einer vergleichenden Betrachtung der Fig. 1 bis 3 und insbesondere aus der Fig. 3 entnimmt man, daß das edlere Metall 2 und das unedlere Metall 3 feinteilige Elemente bilden, die sich leitend berühren. Folglich findet in dem Schmierstoffspender ein elektrochemischer Antrieb über eine Treibgaserzeugung an dem edleren Metall statt.

## Patentansprüche

1. Schmierstoffspender mit
einem zylindrischen Schmierstoffspendergehäuse mit Spenderöffnung für den Schmierstoff,
im Schmierstoffspendergehäuse geführtem Kolben und
einem elektrochemischen Antrieb für den Kolben mit einem Elektrolyten und einem in den Elektrolyten eintauchenden Treibgasbildungsbauteil,
wobei das Treibgasbildungsbauteil (1) zumindest ein in der Spannungsreihe der Elemente edleres Metall (2) und zumindest ein in der Spannungsreihe der Elemente unedleres Metall (3) aufweist, die sich leitend berühren und innerhalb des Treibgasbildungsbauteils mikroskopische Lokalelemente für eine elektrochemische Gaserzeugung bilden, **dadurch gekennzeichnet**, daß das Treibgasbildungsbauteil (1) aus einer zu einer Tablette oder einer Kugel geformten feinteiligen Mischung aus einem pulverförmigen edleren Metall (2) und einem pulverförmigen unedleren Metall (3) besteht.

2. Schmierstoffspender nach Anspruch 1, dadurch gekennzeichnet, daß die pulverförmigen Metalle (2, 3) sintermetallurgisch verbunden sind.

3. Schmierstoffspender nach Anspruch 1, dadurch gekennzeichnet, daß das Treibgasbildungsbauteil aus leitfähigem Kunststoff und den darin eingebetteten feinteiligen edleren und unedleren Metallen aufgebaut ist.

4. Schmierstoffspender nach Anspruch 1 oder 2, dadurch gekennzeichnet, daß das Treibgasbildungsbauteil (1) eine Mehrzahl von Bauteilelementen aus sintermetallurgisch verbundenen edleren und unedleren Metallen (2,3) aufweist, die in eine Matrix aus in dem Elektrolyten lösbaren Kunststoff eingebettet sind.

## Claims

1. A lubricant dispenser having
a cylindrical housing comprising a dispenser opening for the lubricant,
a piston which is guided in the lubricant dispenser housing,
an electrochemical means of propulsion for the piston, comprising an electrolyte and a propellant gas generation component which is immersed in the electrolyte,
wherein the propellant gas generation component (1) comprises at least one more noble metal (2) and at least one less noble metal (3) in the electrochemical series of the elements, which metals are in conductive contact and form microscopic local elements for the electrochemical generation of gas inside the propellant gas generation component, characterised in that the propellant gas generation component (1) consists of a finely divided mixture, which is formed into a tablet or a sphere, of a pulverulent more noble metal (2) and a pulverulent less noble metal (3).

2. A lubricant dispenser according to claim 1, characterised in that the pulverulent metals (2, 3) are bonded by a powder-metallurgical technique.

3. A lubricant dispenser according to claim 1, characterised in that the propellant gas generation component is constructed from a conductive plastics material and from finely divided more noble and less noble metals embedded therein.

4. A lubricant dispenser according to claims 1 or 2, characterised in that the propellant gas generation component (1) comprises a multiplicity of component elements made of more noble and less noble metals (2, 3) which are bonded by a powder-metallurgical technique and which are embedded in a matrix of plastics material which is soluble in the electrolyte.

## Revendications

1. Distributeur de lubrifiant comportant
un boîtier de distributeur de lubrifiant cylindrique avec ouverture de distribution pour le lubrifiant,
un piston guidé dans le boîtier de distributeur de lubrifiant et
un entraînement électrochimique pour le piston avec un électrolyte et un composant de formation de gaz de propulsion plongeant dans l'électrolyte,
le composant de formation de gaz de propulsion (1) présentant au moins un métal précieux (2) dans la série de tension des éléments et au moins un métal non précieux (3) dans la série de tension des éléments, qui sont en contact conducteur et qui forment, à l'intérieur du composant de formation de gaz de propulsion, des éléments locaux microscopiques pour une production électrochimique de gaz, caractérisé en ce que le composant de formation de gaz de propulsion (1) est constitué d'un mélange en fines particules moulées en une pastille ou une bille, d'un métal précieux (2) pulvérulent et d'un métal non précieux (3) pulvérulent.

2. Distributeur de lubrifiant selon la revendication 1, caractérisé en ce que les métaux (2, 3) pulvérulents sont assemblés selon la métallurgie des poudres.

3. Distributeur de lubrifiant selon la revendication 1, caractérisé en ce que le composant de formation de gaz de propulsion est constitué d'une matière plastique conductrice et des métaux précieux et non précieux en fines particules noyés à l'intérieur.

4. Distributeur de lubrifiant selon la revendication 1 ou 2, caractérisé en ce que le composant de formation de gaz de propulsion (1) comporte une pluralité d'éléments de composant constitués de métaux précieux et non précieux (2, 3) assemblés selon la métallurgie des poudres, qui sont noyés dans une matrice réalisée en une matière plastique soluble dans l'électrolyte.
